# EUROPEAN PATENT SPECIFICATION

(11) **EP 1 971 908 B1**
(45) Date of publication and mention of the grant of the patent: **04.07.2018**
(21) Application number: 07716540.5
(22) Date of filing: 11.01.2007
(51) Int. Cl.: G06F 9/445, H04N 21/81, H04N 21/426

(54) **FIRMWARE UPDATES ON MEDIA**
FIRMWARE-UPDATES AUF MEDIEN
MISES A JOUR DE MICROLOGICIEL DANS DES SUPPORTS

(30) Priority: 11.01.2006 US 758451 P
(43) Date of publication of application: 24.09.2008
(60) Divisional application: 11164791.3
(73) Proprietor: Sony Corporation, Tokyo (JP); Sony Pictures Entertainment Inc., Culver City, CA 90232 (US)
(72) Inventor: EKLUND, Don, Charles, II, Yorba Linda, CA 92886 (US)
(74) Representative: D Young & Co LLP
(86) International application number: PCT/US2007/000714
(87) International publication number: WO 2007/082028

(56) References cited:
- US-A1- 2003 063 896
- US-A1- 2004 107 356
- US-A1- 2004 187 103
- US-A1- 2005 122 401
- US-A1- 2005 278 256
- DATABASE WPI Section EI, Week 200207 Thomson Scientific, London, GB; Class T03, AN 2002-054147 XP002223252 & KR 2001 069 857 A (REIGN.COM LTD) 25 July 2001 (2001-07-25) & KR 2001 0069857 A (REIGN COM LTD [KR]) 25 July 2001 (2001-07-25)
- ANONYMOUS: "How to upgrade Sampo DVD Player's firmware" INTERNET CITATION, [Online] XP002223251 Retrieved from the Internet: URL:http://www.sampoamericas.com/support/d vdDrivers.html> [retrieved on 2002-12-02]

## Description

### FIELD OF THE INVENTION

The invention is in the field of updating media players, and in particular updating of Firmware for controllers of media players.

### BACKGROUND OF THE INVENTION

In conventional systems, updates for firmware or software of a device are typically provided by the device manufacturer directly to the user of the device for installation. However, this approach can be cumbersome for users, in particular when there are many updates over time.

In addition, if the update mechanism is necessary but inconvenient, e.g., due to a complicated and evolving standard, the device or standard associated with the device may become less popular with users. Background art is US 2003/0063896 which relates to a system utility interface for software upgrades and system diagnostics in automotive or portable DVD players.

### SUMMARY OF THE INVENTION

In one aspect, there is provided a method according to Claim 1.

Implementations of the invention may include one or more of the following. The media player may be a BD-ROM player, a DVD player, a CD-ROM player, a magnetic or optical disk player, or a flash memory player. Where the media player is a DVD player or a BD-ROM player, the content may be a motion picture or televised program. The method may further include making a plurality of slots to contain a corresponding plurality of updates. At least a portion of the plurality of slots may contain different updates for one media player, e.g., each slot may contain a different update for one type of media player. In another embodiment, at least a portion of the plurality of slots contain different updates, one or more each for a plurality of types of media players. For example, each slot may contain the latest update for a different type of media player. The media player may be configured to automatically detect the presence of an update. The method may further include storing the update in a disc replicator, such that the update is provided on the media when the media is replicated. The method may further include storing an update in each slot until all the slots are filled, and then replacing an oldest-in-time update with a next-in-time update. The update may be encrypted, and may include a header that identifies to which media player the update pertains.

In another aspect, there is provided a computer-readable medium according to Claim 15.
Further respective aspects and features of the invention are defined in the appended claims.

Advantages of embodiments of the invention may include one or more of the following. The update procedure for media players is convenient for users, and few additional steps are required. Even large updates can be provided to users easily. The user enjoys a positive experience with the media player, and use of the same may increase.

### BRIEF DESCRIPTION OF THE INVENTION

Fig. 1 shows a flowchart depicting a first embodiment of the invention.
Fig. 2 depicts two alternative embodiments of a step depicted in Fig. 1.
Fig. 3 depicts a schematic representation of a media player device that may be employed with embodiments of the present invention.
Fig. 4 shows a flowchart depicting another embodiment of the invention.
Fig. 5 shows a flowchart depicting a further embodiment of the invention.
Fig. 6 depicts a schematic representation of a media replicator device that may be employed with embodiments of the present invention.
Fig. 7 shows a flowchart depicting steps of an embodiment of the invention using the device of Fig. 6.
Fig. 8 depicts a medium containing slots according to another embodiment of the invention.
Fig. 9 shows a flowchart depicting steps of an embodiment of the invention using the medium of Fig. 8.
Fig. 10 shows a flowchart depicting yet a further embodiment of the invention.
Fig. 11 depicts a medium containing slots according to another embodiment of the invention.

### DETAILED DESCRIPTION

The following definitions are employed in this description.

"Content" refers in this context to information or data that may be played back, including viewed or listened to, to an audience, including a single viewer/listener. Content will typically include one or more of audio data, video data, or image data.

"Media" refers to a device or article that contains or stores content or other data files or applications, such as a CD, DVD, or Blu-ray Disc. Media may also refer to downloaded content or other data files or applications.

"Media player" refers to a device that can play back content, such as a DVD player, BD-ROM player, CD-ROM player, computer, and other such devices.

"Controller" of a media player refers to software, hardware, firmware, or any other format, containing instructions employable by a processor to operate a media player.

"Update" to a controller of a media player refers to software and/or data that modifies part or all of the controller of a media player. Update data may also be generally considered "non-content" data, and vice-versa. The update may apply to controlling aspects of the operation of the player other than the media functions of the player. The update may also be or include updates for data stored on the player, but not directly used for control (e.g., display data).

"UDCM" or "Update/Content Medium" refers to a medium that contains both content and an update.

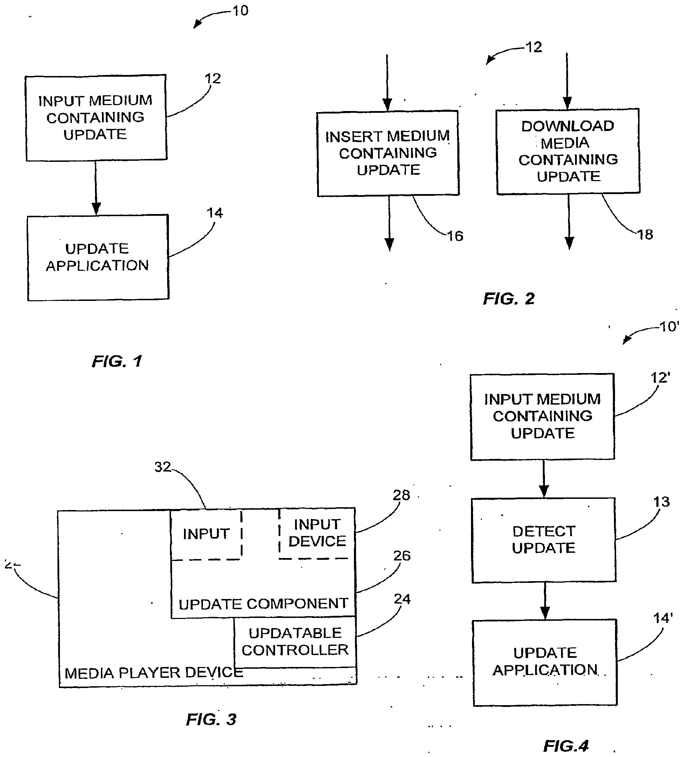

Referring to Fig. 1, in one exemplary embodiment 10, the invention includes steps of inputting a medium containing an update (step 12), and updating or modifying an application, in particular a controller of a media player, with the update. The inputting of a medium (step 12) may be accomplished (see Fig. 2) by inserting a medium containing the update (step 16) or by downloading media containing the update (step 18).

In more detail, updates are provided on media to be used with a media player 22 or other such device. In one implementation, shown in Fig. 3, a media player 22 includes an updatable controller 24 and an update component 26, both of which may constitute hardware, software, firmware, or a combination, that can detect update data and use the same to update the controller within the media player. The medium may be accessible to the media device 22 via an input device 28 or via an input 32. The input device 28 may be, e.g., a disc drive with accompanying components and circuitry. The alternative input device 32 may be any sort of component that can accept content files and update files, e.g., a USB input, a USB2 input, a wireless input, a FireWire input, or any other type of input or combination of inputs that can carry a signal, in particular, combinations of content and update data.

In another embodiment 10', seen in Fig. 4, the invention may include steps of inputting a medium containing an update (step 12') where the media player or other device is configured to detect whether the medium contains an update that pertains to the media device or player. Upon such detection, the controller may be updated accordingly (step 14'), either automatically or upon the user verifying that such update is desired, as discussed in more detail below. If no appertaining update is detected, the content on the medium may be played back like any other.

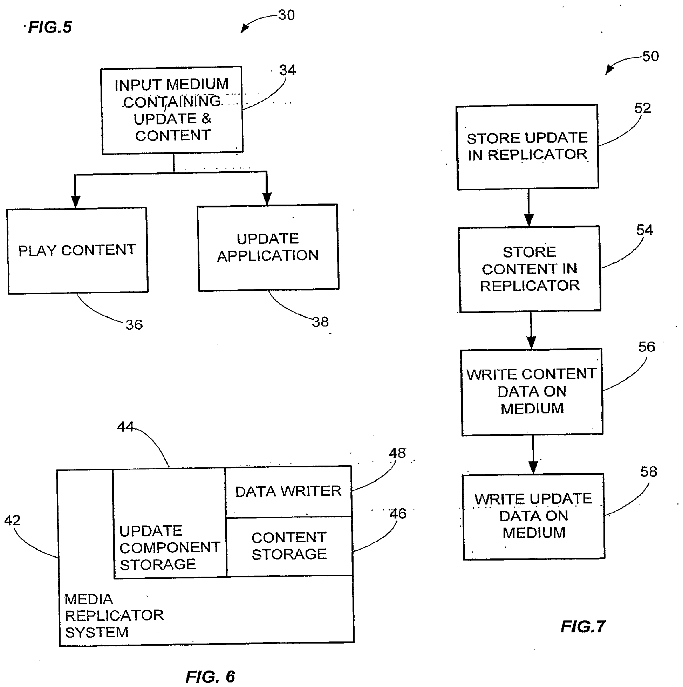

Referring to the embodied method 30 of Fig. 5, an update/content medium may be input that contains both update data as well as content (step 34). The content may be played back (step 36), and the controller may be updated accordingly (step 38). Steps 36 and 38 may occur in any order, or may even occur simultaneously.

Referring to Fig. 6, the system and method may be implemented as part of a disc replicator system 42. The disc replicator system 42 may store data corresponding to updates in an update component storage 44, and may store data corresponding to content in a content storage 46. Alternatively, the update component storage and the content storage are combined into a single storage device or system. A data writer 48 writes the actual data, of both types, on the media. In this way, the disc replicator system 42 may store respective update data for one or more media devices on an article of media along with non-update data.

In particular, referring to Fig. 7, this method 50 may begin by the storage in the replicator of the update data (step 52). The method 50 may continue with the storage in the replicator of the content data (step 54). The content (step 56) and the update (step 58) data may then be written to the media. Of course, the steps in which the content and data are stored and subsequently written may occur in any order.

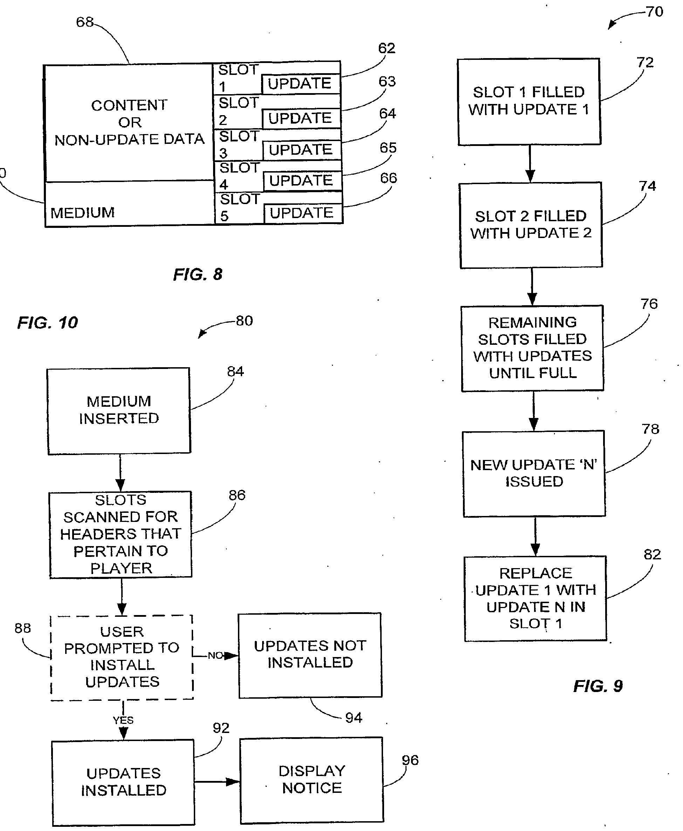

The update data on a medium may include, e.g., sequential updates to a single type of media player. To accomplish this, as shown in the embodiment of Fig. 8, a medium 60 is shown with content or non-update data 68 and a number of slots, numbered 1-5, each holding updates 62-66, respectively. Other implementations of media can include more or fewer slots. The slots can be specifically dedicated areas (physical or logical) of storage on the media (e.g., dedicated through a corresponding specification for the media), or can make use of other storage space (e.g., space deemed unused by the media author, such as space allocated according to a media specification but left empty in the media being prepared; or a collection of space spread across the media and indexed through a table stored in a defined or searchable location).

For example, a Blu-ray Disc (BD) media player device may accept updates that are stored on a BD disc (BD-ROM), such as a movie disc. A number of data slots contained on BD-ROM movie titles can be used to host updates for an appertaining BD player. A 'slot' can be filled by a disc replicator company as above as needed on request of a player company.

The 'slots' can be managed on a "first in, first out" basis to allow the cycling out of updates and to make room for new ones. Referring to the embodiment in Fig. 9, a method 70 may start with a first slot hosting a first update (step 72), a second slot hosting a second update (step 74), and so on. The remaining slots may be filled with updates until all the slots are used (step 76). When a new update "N" is issued (step 78), the new update may overwrite and take the place of update 1 in slot 1. In this way, the oldest update is replaced by the newest update. For example, as new copies of a movie are released over time, the updates stored to the media will change depending on what update data is received from player manufacturers.

In the BD-ROM embodiment, the BD-ROM could include a defined number of slots for updates. The replicator system as above may fill these slots with updates received from player companies in the order received. At the time of the initial release of the title, if there were no updates, the slots would be empty, or could alternatively be used for other data storage. As updates are received, the slots are used and the BD-ROMs are produced with the current set of slots. When a new update is received and the slots are all used, the oldest update is replaced with the new update. In this way, the updates are rotated. This may be particularly important in the BD-ROM setting, as the standard is complex and evolving.

Referring to Fig. 10, a method 80 is shown for detection of the presence of updates on an update/content medium. Headers may be disposed at the beginning of each update data to indicate to what media players the update applies. Upon disc insertion or booting (step 84), the slots are scanned (step 86) for headers that indicate an update pertaining to the employed media player. If an applicable header, and thus update, is found in the scan step, the same may be automatically installed or optionally the user may be prompted as to whether installation is desired (step 88). If the user agrees to the installation (the YES branch of step 88), the same may be installed as appropriate (step 92). This step may include detection of prior-installed updates to ensure duplicate installations are avoided, as well as to ensure all the necessary updates, if more than one is necessary, are installed. A notice may be displayed to the user in any case (step 96) notifying the same of the installation and, e.g., directing enquiries or troubleshooting to the appropriate parties. If the user does not agree to the installation (the NO branch of step 88), the installation may be cancelled (step 94).

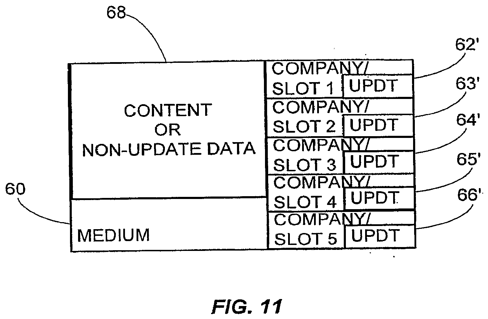

A further embodiment is shown in Fig. 11. In this embodiment, the medium 60 again contains content or non-update data 68, but slots 1-5 include updates 62'-66'. In this embodiment, rather than containing sequential updates to one media player, the slots may contain the latest update for each type of media player. Of course, the embodiment of Fig. 11 may be combined with the embodiment of Fig..8, such that some slots contain sequential updates and other slots contain updates from multiple respective companies.

In the BD-ROM setting, a slot may be provided on the disc for each of a group of BD player companies, and the most recent update received from a company is stored in the corresponding slot. In this way, each company is ensured to have their most recent update on the BD-ROM disc. A player company using an update slot may optionally encrypt the header and the update data to its own specifications, or can include functionality in the media player to ensure that a power failure or any consumer action does not corrupt the player function through the update process. Moreover, the player company may provide advanced copies of updates to content companies so the updates can be tested so as not to deleteriously affect already released software titles.

One implementation of the above invention includes one or more programmable processors and corresponding computer system components to store and execute computer instructions, such as to provide reading the update from a disc and updating firmware or other controllers in a media player, or to provide storing the update data to a storage medium in a replicator system.

It should be noted that while the above description has been made with respect to specific embodiments, the scope of the invention is to be interpreted and limited only by the scope of the claims appended hereto. It should also be noted that the above descriptions has used the terms "system" and "method" in an exemplary fashion, and these refer to system embodiments and method embodiments of the invention. The use of one such term does not exclude consideration of the other with respect to the described and pertaining embodiment. Moreover, other variations and implementations are possible. For example, various types of media can be used, such as DVD, CD-ROM, BD-ROM, magnetic disks, flash memory, or downloadable files. The update/content medium can include various content, such as audio, video, movies, games, music, software, or other data. The media players can be of various types, such as optical disc players, computer systems, mobile devices (e.g., phones or PDAs), game systems, etc.

## Claims

1. A method of updating a controller of a media player (22) said controller containing instructions employable by a processor to operate the media player, the method comprising:
providing an update/content medium (60), the update/content medium (60) including content data (68) corresponding to content that may be played back by the media player and update data (62, 63, 64, 65, 66) arranged as a plurality of dedicated storage areas each storing respective update data corresponding to at least one update which, when installed, will modify part or all of the controller of a media player, at least a portion of the plurality of dedicated storage areas containing different updates, one or more each for a plurality of types of media players;
inserting the update/content medium (60) into the media player (22);
detecting whether the update/content medium contains an update that pertains to the media player, and if so, installing the update/content medium (60) such that the controller of the media player (22) is modified in response to the update data; and
the media player replaying content from the update/content medium.

2. The method of Claim 1, wherein the media player is selected from the group consisting of: a DVD player, a CD-ROM player, a magnetic or optical disk player, and a flash memory player.

3. The method of Claim 1, wherein the media player is a BD-ROM player.

4. The method of Claim 2, wherein the media player is a DVD player or a BD- ROM player and the content is a motion picture or televised programme.

5. The method of Claim 1, wherein at least a portion of the plurality of dedicated storage areas contain different updates for one media player.

6. The method of Claim 1, wherein each slot contains a latest update for a different type of media player.

7. The method of Claim 1, wherein the media player is configured to automatically detect the presence of an update.

8. The method of Claim 1, wherein the providing further comprises storing the update data in a disc replicator, such that the update data is provided on the media when the media is replicated.

9. The method of Claim 1, wherein the providing further comprises storing an update in each dedicated storage area until all the dedicated storage areas are filled, and then replacing an oldest-in-time update with a next-in-time update.

10. The method of Claim 1, wherein the update is encrypted.

11. The method of Claim 1, wherein the update includes a header that identifies to which media player the update pertains.

12. The method of Claim 11, wherein the header is encrypted.

13. A method according to any one of the preceding claims, comprising:
instructing a user to insert the update/content medium into the media player;
detecting if the update/content medium includes an update corresponding to the media player, and if so:
i. displaying a screen to the user via the media player, the screen giving the user the option to install the update;
ii. such that if the user chooses to install the update, the update modifies the controller of the media player.

14. The method of Claim 13, further comprising displaying a notice that the update was installed.

15. A computer-readable medium (60) including data corresponding to media content that may be played back by a media player (22) and a plurality of dedicated storage areas containing data corresponding to at least one update of each of a plurality of types of media players, said medium containing instructions to carry out the steps of method claim 1.

## Patentansprüche

1. Verfahren zum Aktualisieren einer Steuereinheit eines Medienabspielgeräts (22), wobei die Steuereinheit Anweisungen enthält, die durch einen Prozessor anwendbar sind, um das Medienabspielgerät zu betreiben, wobei das Verfahren Folgendes umfasst:
Bereitstellen eines Aktualisierungs-/Inhaltsmediums (60), wobei das Aktualisierungs-/Inhaltsmedium (60) Inhaltsdaten (68), die Inhalt entsprechen, der durch das Medienabspielgerät wiedergegeben werden kann und Aktualisierungsdaten (62, 63, 64, 65, 66), die als mehrere dedizierte Speicherbereiche angeordnet sind, die jeweils jeweilige Aktualisierungsdaten speichern, die zumindest einer Aktualisierung entsprechen, die dann, wenn sie installiert ist, einen Teil der oder die gesamte Steuereinheit eines Medienabspielgeräts ändert, enthält, wobei zumindest ein Teil der mehreren dedizierten Speicherbereiche verschiedene Aktualisierungen enthält, einen oder mehrere, die jeweils für mehrere Typen von Medienabspielgeräten dienen;
Einfügen des Aktualisierungs-/Inhaltsmediums (60) in das Medienabspielgerät (22);
Detektieren, ob das Aktualisierungs-/Inhaltsmedium eine Aktualisierung enthält, die sich auf das Medienabspielgerät bezieht, und wenn ja, Installieren des Aktualisierung-/Inhaltsmediums (60) derart, dass die Steuereinheit des Medienspielers (22) als Reaktion auf die Aktualisierungsdaten geändert wird; und
dass das Medienabspielgerät Inhalt von dem Aktualisierung-/Inhaltsmedium wiedergibt.

2. Verfahren nach Anspruch 1, wobei das Medienabspielgerät aus der Gruppe ausgewählt ist, die aus Folgendem besteht: einem DVD-Spieler, einem CD-ROM-Spieler, einem Abspielgerät für magnetische oder optische Disks und einem Flash-Speicherabspielgerät.

3. Verfahren nach Anspruch 1, wobei das Medienabspielgerät ein BD-ROM-Spieler ist.

4. Verfahren nach Anspruch 2, wobei das Medienabspielgerät ein DVD-Spieler oder ein BD-ROM-Spieler ist und der Inhalt ein Spielfilm oder ein Fernsehprogramm ist.

5. Verfahren nach Anspruch 1, wobei zumindest ein Teil der mehreren dedizierten Speicherbereiche verschiedene Aktualisierungen für ein Medienabspielgerät enthält.

6. Verfahren nach Anspruch 1, wobei jeder Slot zumindest eine neueste Aktualisierung für einen anderen Typ von Medienabspielgerät enthält.

7. Verfahren nach Anspruch 1, wobei das Medienabspielgerät konfiguriert ist, automatisch die Anwesenheit einer Aktualisierung zu detektieren.

8. Verfahren nach Anspruch 1, wobei das Bereitstellen ferner umfasst, die Aktualisierungsdaten in einer Diskreproduktionseinrichtung zu speichern, so dass die Aktualisierungsdaten auf dem Medium bereitgestellt werden, wenn das Medium reproduziert wird.

9. Verfahren nach Anspruch 1, wobei das Bereitstellen ferner umfasst, eine Aktualisierung in jedem dedizierten Speicherbereich zu speichern, bis alle dedizierten Speicherbereiche gefüllt sind, und dann, eine älteste Aktualisierung durch die nächstälteste Aktualisierung zu ersetzen.

10. Verfahren nach Anspruch 1, wobei die Aktualisierung verschlüsselt ist.

11. Verfahren nach Anspruch 1, wobei die Aktualisierung einen Dateikopf enthält, der identifiziert, auf welches Medienabspielgerät sich die Aktualisierung bezieht.

12. Verfahren nach Anspruch 11, wobei der Dateikopf verschlüsselt ist.

13. Verfahren nach einem der vorhergehenden Ansprüche, das Folgendes umfasst:
Anweisen eines Anwenders, das Aktualisierungs-/Inhaltsmedium in das Medienabspielgerät einzufügen;
Detektieren, ob das Aktualisierungs-/Inhaltsmedium eine Aktualisierung enthält, die das Medienabspielgerät entspricht, und wenn ja:
i. Anzeigen eines Bildschirms für den Anwender über das Medienabspielgerät, wobei der Bildschirm dem Anwender die Option gibt, die Aktualisierung zu installieren;
ii. derart, dass dann, wenn der Anwender wählt, die Aktualisierung zu installieren, die Aktualisierung die Steuereinheit des Medienabspielgeräts ändert.

14. Verfahren nach Anspruch 13, das ferner umfasst, eine Mitteilung anzuzeigen, dass die Aktualisierung installiert wurde.

15. Computerlesbares Medium (60), das Daten, die Medieninhalt entsprechen, der durch ein Medienabspielgerät (22) abgespielt werden kann, und mehrere dedizierte Speicherbereiche, die Daten enthalten, die zumindest einer Aktualisierung jedes von mehreren Typen von Medienabspielgeräten entsprechen, enthält, wobei das Medium Anweisungen enthält, die Schritte des Verfahrens nach Anspruch 1 auszuführen.

## Revendications

1. Procédé de mise à jour d'un contrôleur d'un lecteur multimédia (22), ledit contrôleur contenant des instructions pouvant être utilisées par un processeur pour faire fonctionner le lecteur multimédia, le procédé comprenant les étapes suivantes :
fournir un support de mise à jour/de contenu (60), le support de mise à jour/de contenu (60) comprenant des données de contenu (68) correspondant au contenu qui peut être lu par le lecteur multimédia et des données de mise à jour (62, 63, 64, 65, 66) arrangées sous la forme d'une pluralité de zones de stockage dédiées, chacune stockant des données de mise à jour respectives correspondant à au moins une mise à jour qui, une fois installée, modifiera une partie ou la totalité du contrôleur d'un lecteur multimédia, au moins une partie de la pluralité de zones de stockage dédiées contenant différentes mises à jour, les une ou plusieurs étant chacune pour une pluralité de types de lecteurs multimédia ;
insérer le support de mise à jour/de contenu (60) dans le lecteur multimédia (22) ;
détecter si le support de mise à jour/de contenu contient une mise à jour qui concerne le lecteur multimédia et, si tel est le cas, installer le support de mise à jour/de contenu (60) de manière à ce que le contrôleur du lecteur multimédia (22) soit modifié en réponse aux données de mise à jour ; et
le lecteur multimédia lisant à nouveau le contenu du support de mise à jour/de contenu.

2. Procédé selon la revendication 1, dans lequel le lecteur multimédia est sélectionné dans le groupe constitué par : un lecteur de DVD, un lecteur de CD-ROM, un lecteur de disque magnétique ou optique et un lecteur de mémoire flash.

3. Procédé selon la revendication 1, dans lequel le lecteur multimédia est un lecteur BD-ROM.

4. Procédé selon la revendication 2, dans lequel le lecteur multimédia est un lecteur DVD ou un lecteur BD-ROM et le contenu est un film ou un programme télévisé.

5. Procédé selon la revendication 1, dans lequel au moins une partie de la pluralité de zones de stockage dédiées contient différentes mises à jour pour un lecteur multimédia.

6. Procédé selon la revendication 1, dans lequel chaque emplacement contient la dernière mise à jour pour un type différent de lecteur multimédia.

7. Procédé selon la revendication 1, dans lequel le lecteur multimédia est configuré pour détecter automatiquement la présence d'une mise à jour.

8. Procédé selon la revendication 1, dans lequel la fourniture comprend en outre de stocker des données de mise à jour dans un duplicateur de disque, de manière à ce que les données de mise à jour soient fournies sur le support lorsque le support est dupliqué.

9. Procédé selon la revendication 1, dans lequel la fourniture comprend en outre de stocker une mise à jour dans chaque zone de stockage dédiée jusqu'à ce que toutes les zones de stockage dédiées soient remplies, puis de remplacer la mise à jour la plus ancienne par la mise à jour suivante.

10. Procédé selon la revendication 1, dans lequel la mise à jour est cryptée.

11. Procédé selon la revendication 1, dans lequel la mise à jour comprend un en-tête qui identifie à quel lecteur multimédia la mise à jour se rapporte.

12. Procédé selon la revendication 11, dans lequel l'en-tête est crypté.

13. Procédé selon l'une quelconque des revendications précédentes, comprenant les étapes suivantes :
demander à un utilisateur d'insérer le support de mise à jour/de contenu dans le lecteur multimédia ;
détecter si le support de mise à jour/de contenu inclut une mise à jour correspondant au lecteur multimédia et, si tel est le cas :
afficher un écran à l'attention de l'utilisateur par l'intermédiaire du lecteur multimédia, l'écran donnant à l'utilisateur la possibilité d'installer la mise à jour ;
de manière à ce que si l'utilisateur choisit d'installer la mise à jour, la mise à jour modifie le contrôleur du lecteur multimédia.

14. Procédé selon la revendication 13, comprenant en outre d'afficher un avis indiquant que la mise à jour a été installée.

15. Support lisible par ordinateur (60) comprenant des données correspondant à un contenu multimédia qui peut être lu par un lecteur multimédia (22) et une pluralité de zones de stockage dédiées contenant des données correspondant à au moins une mise à jour de chacun d'une pluralité de types de lecteurs multimédia, ledit support contenant des instructions pour exécuter les étapes de la revendication de procédé 1.
